Europäisches Patentamt

European Patent Office

Office européen des brevets

(19)

(11) Veröffentlichungsnummer: **0 040 389**
**B1**

(12) **EUROPÄISCHE PATENTSCHRIFT**

(45) Veröffentlichungstag der Patentschrift:
**23.03.83**

(21) Anmeldenummer: **81103634.2**

(22) Anmeldetag: **12.05.81**

(51) Int. Cl.³: **B 65 G 65/34,** B 65 G 53/28

(54) Verfahren zum Entleeren von transportablen Behältern für feinkörniges Transportgut.

(30) Priorität: **16.05.80 DE 3018627**

(43) Veröffentlichungstag der Anmeldung:
**25.11.81 Patentblatt 81/47**

(45) Bekanntmachung des Hinweises auf die Patenterteilung:
**23.03.83 Patentblatt 83/12**

(84) Benannte Vertragsstaaten:
**BE DE FR GB NL**

(56) Entgegenhaltungen:
**DE-A-1 531 979**
**DE-A-2 363 721**
**DE-B-2 437 799**
**DE-C-277 520**
**DE-C-1 137 383**
**DE-C-1 146 443**
**DE-U-7 511 900**
**US-A-2 930 512**

(73) Patentinhaber: **RUHRKOHLE AKTIENGESELLSCHAFT,**
**Rellinghauser Strasse 1 Postfach 10 32 62,**
**D-4300 Essen 1 (DE)**

(72) Erfinder: **Strese, Gerhard, Ing. grad.,**
**Johann-Strauss-Strasse 11, D-4174 Issum (DE)**
Erfinder: **Lüttker, Johann, Werdener Strasse 63,**
**D-4200 Oberhausen (DE)**

## Verfahren zum Entleeren von transportablen Behältern für feinkörniges Transportgut

Die Erfindung betrifft ein Arbeitsverfahren zum Entleeren von Behältern, insbesondere Containern, für feinkörniges, insbesondere staubförmiges Transportgut, wobei das Transportgut aus dem Behälter in einen Zwischenbehälter angesaugt wird, der danach gegenüber dem das Transportgut enthaltenden Behälter verschlossen wird und mit Druck beaufschlagt wird, so daß das in den Zwischenbehälter eindringende Druckmittel das Transportgut in eine geöffnete Entleerungsleitung drückt.

Derartige Verfahren sind aus der DE-A-1 531 979 bekannt.

Das Entleeren derart transportabler Behälter für feinkörniges Transportgut ist in der Regel unproblematisch, solange es sich um rieselfähiges Transportgut handelt und auch gewährleistet ist, daß das Transportgut nach einiger Transportdauer seine Rieselfähigkeit noch hat. Bei feinkörnigem, insbesondere staubförmigem Transportgut, wie beispielsweise Kohlenstaub, ist keine Rieselfähigkeit für eine kurzzeitige Behälterentleerung gegeben. Ferner erschwert jede mit übermäßiger, unter Bewegung beim Transport eintretender Verdichtung des Transportgutes dessen Entleerung.

Feinkörniges, insbesondere staubförmiges Transportgut wird zweckmäßigerweise in möglichst dichten Behältern transportiert. Diese Dichtigkeit der Behälter könnte es naheliegend erscheinen lassen, den Entleerungsvorgang durch Luftdruck an der Oberseite des Transportgutes zu unterstützen. Das erweist sich jedoch als unwirksam. Zur Lösung derartiger Entleerungsprobleme ist es aus der US-PS 2 930 512 bekannt, den Entleerungsvorgang durch Ansaugen des Transportgutes zu unterstützen. Dabei ergibt sich jedoch eine wesentliche technische Schwierigkeit mit der notwendigen Trennung der angesaugten Partikel aus der Saugströmung. Andernfalls würde die Saugeinrichtung kurzfristig verstopfen. Nach dem bekannten Vorschlag wird die Trennung der Partikel durch einen in der Saugleitung angeordneten Zyklon erreicht. Die von der Saugströmung in den Zyklon gezogenen Partikel werden in Drehung versetzt und aufgrund der dann auf sie einwirkenden Zentrifugalkraft aus der Saugströmung herausgeschleudert.

Von Zyklonen ist bekannt, daß sie keine hundertprozentige Abscheidewirkung besitzen. Selbst wenn die verbleibenden Partikel aufgrund entsprechender Dimensionierung der Saugeinrichtung keine Gefahr eines Verstopfens hervorrufen, ist jedoch ein Austreten der Partikel in die umgebende Atmosphäre regelmäßig unzulässig und ein der Saugvorrichtung vorgeschalteter Filter notwendig.

Aus wirtschaftlichen und bei entsprechenden Entfernungen und Höhenunterschieden aus technischen Gründen ist der durch Ansaugen überbrückbare Transportweg begrenzt. Das führt zu der Überlegung, zum Entleeren einen Zwischenbehälter zu verwenden, in dem das Transportgut angesaugt wird und aus dem sich das Transportgut noch mittels Druckluft austragen läßt. Zwangsläufig kann der Zwischenbehälter deshalb nur einen Bruchteil des Volumens des Transportbehälters besitzen. Das hat einen intermittierenden Betrieb zur Folge, wenn nicht besondere Maßnahmen ergriffen werden. Beispielsweise kann zur Erzeugung eines kontinuierlichen Betriebes mit mehreren, im Gegentakt arbeitenden Zwischenbehältern gefahren werden. Das bedingt Füllstandsanzeigen an jedem Zwischenbehälter und eine geeignete Schaltung zum Umschalten von einem Behälter auf den anderen nach Erreichen eines bestimmten Füllungsgrades. Die Füllstandsanzeigen sind beim Betrieb mit feinkörnigen, insbesondere staubförmigen Transportgütern, üblicherweise störungsanfällig.

Nach einem anderen Vorschlag besteht der Zwischenbehälter aus einem Vakuumbehälter und einem unter dem Vakuumbehälter angeordneten Druckbehälter, wobei sich zwischen dem Vakuumbehälter und dem Druckbehälter eine Zellenradschleuse befindet. Die Zellenradschleuse ermöglicht kontinuierlichen Saugbetrieb für den Vakuumbehälter bei entsprechender Partikelabscheidung und -Filtrierung, indem die Zellenradschleuse das sich in dem Vakuumbehälter sammelnde Transportgut kontinuierlich in den Druckbehälter abgibt, von wo aus das Transportgut über ein Rohr bzw. eine Schlauchleitung mittels Druckluft in ein Silo geblasen wird.

Bei einem derartigen Entleerungssystem ist die Filterbelastung besonders hoch.

Das resultiert aus einer Leckströmung durch die Zellenradschleuse entgegen der Förderrichtung des Transportgutes. Außerdem zeigt sich, daß die Leckströmung Luftkissen bildet, die das Transportgut tragen und das Füllen der Zellenradschleuse beeinträchtigen, und zwar ist aus der DE-A-1 531 979 bekannt, das Transportgut in einen Zwischenbehälter anzusaugen, der danach mit Druck beaufschlagt wird, so daß in den Zwischenbehälter eindringendes Druckmittel das Transportgut in eine geöffnete Entleerungsleitung drückt, jedoch enthält diese Druckschrift keine über das übliche Ansaugen des Transportgutes hinausgehende Anregung.

Der Erfindung liegt daher die Aufgabe zugrunde, die Filterschwierigkeiten und Dichtungsschwierigkeiten bisheriger Entleerungssysteme zu verbessern. Nach der Erfindung wird das dadurch erreicht, daß der Zwischenbehälter in gegenüber dem das Transportgut enthaltenden Behälter geschlossenem Zustand evakuiert wird, der Zwischenbehälter anschließend gegenüber der Evakuierungseinrichtung verschlossen und zu dem das Transportgut enthaltenden Behälter geöffnet wird.

Infolge des im Zwischenbehälter herrschenden Unterdruckes wird das sich im Transportbehälter befindende Transportgut in den Zwischenbehälter gesogen. Während des Saugvorganges verringert

sich der Unterdruck im Zwischenbehälter. Wider Erwarten verzögert das dadurch bedingte Abfallen der Saugwirkung den Saugvorgang nur vernachlässigbar gering. Der Füllvorgang erfolgt nahezu schlagartig. Vorteilhafterweise ist der dazu notwendige Unterdruck ohne besonderen technischen Aufwand zu erreichen. Zum Beispiel gewährleistet ein Unterdruck von −0,6 bar für einen auf etwa 32 kg Staub ausgelegten Zwischenbehälter den erfindungsgemäßen schlagartigen Füllvorgang.

Der Füllvorgang kann druckgesteuert oder zeitgesteuert ablaufen. Das gleiche gilt für den Evakuierungsvorgang. Besonders vorteilhaft ist die Zeitsteuerung, da die Füllmenge im Zwischenbehälter schwanken kann. Der für eine Zeitsteuerung erforderliche bauliche Aufwand (Zeitrelais) ist extrem gering. Die Zeit für den Füllvorgang wird so bemessen, daß das Schließventil in der Anschlußleitung des Zwischenbehälters an den Transportbehälter nach Beendigung des Massenflusses in der Anschlußleitung schließt und die Dichtflächen des Schließventils sauber sind.

Vorteilhafterweise entsteht beim Ansaugen des Transportgutes (Füllvorgang) keine Filterbelastung. Das resultiert aus dem erfindungsgemäßen vorherigen Verschließen der Saugleitung.

Nach Füllen des Zwischenbehälters wird der Zwischenbehälter erneut gegenüber dem Transportbehälter verschlossen, bleibt die Saugleitung weiter verschlossen und wird eine Entleerungsleitung geöffnet, die zu einem Silo oder unmittelbar zu einer Verbraucherstelle führt. Gleichzeitig mit dem Öffnen dieser Leitung wird Druck auf das sich im Zwischenbehälter befindende Transportgut ausgeübt, so daß es in das Silo bzw. zur Verbraucherstelle entweicht. Als Druckmittel dient vorzugsweise Luft. In Abhängigkeit von den Erfordernissen des Transportgutes kann der Druck jedoch auch mit einem Inert-Gas erzeugt werden. Das Inert-Gas ist im einfachsten Fall Abgas eines die notwendige Saug- und Druckleistung für den Entleerungsvorgang liefernden Verbrennungsmotors.

Das sich im Zwischenbehälter befindende Transportgut wird nach Beendigung des Füllvorganges, spätestens mit Beginn des Entleerungsvorganges im Zwischenbehälter fluidisiert. Das geschieht dadurch, daß das Druckmittel nicht allein in die zum Silo führende oder zu der Verbraucherstelle führende Leitung gerichtet ist, sondern auch gegen das sich im Zwischenbehälter befindende Transportgut gerichtet ist.

Der Druck wird so gewählt, daß das Druckmittel durch das Transportgut in den Zwischenbehälter dringt. Zweckmäßigerweise ist die Eintrittsöffnung für das Druckmittel möglichst dicht neben der Austrittsöffnung des Zwischenbehälters angeordnet.

Aufgrund der Fluidisierung erfolgt der Entleerungsvorgang gleichfalls nahezu schlagartig.

Nach dem Entleeren des Zwischenbehälters ist ein Arbeitszyklus beendet. Der nächste Arbeitszyklus beginnt mit dem Verschließen der Austrittsöffnung des Zwischenbehälters und dem erneuten Evakuieren des Zwischenbehälters.

Erfindungsgemäß handelt es sich bei dem Entleerungsvorgang mit nur einem Zwischenbehälter um einen intermittierenden Transportvorgang. Durch Parallelschaltung von zwei oder mehr Zwischenbehältern kann ein im wesentlichen kontinuierlicher Entleerungsvorgang erzeugt werden. Die verschiedenen Zwischenbehälter arbeiten dann jeweils im Gegentakt, und zwar so, daß die Arbeitstakte »Füllen« des Zwischenbehälters bzw. die Arbeitstakte »Entleeren« des Zwischenbehälters sich möglichst dicht aneinander anschließen oder sogar überlappen.

Die Steuerung der verschiedenen Zwischenbehälter erfolgt wahlweise durch getrennte, gegeneinander verriegelbare Ventile oder gemeinsame, Mehrwegventile, die die Funktion der separaten Ventile übernehmen.

Eine besonders vorteilhafte und einfach herstellbare Vorrichtung zu erfindungsgemäßen Entleeren ist mit einem aufrecht stehenden Zwischenbehälter gegeben, dessen Austrittsöffnung und Fluidisierungsöffnungen im Bodenbereich angeordnet sind. Dazu ist der Behälterboden und/oder der Behältermantel im Bodenbereich als Fluidisierungsboden bzw. Fluidisierungsmantel ausgebildet. D. h. es befinden sich im Boden oder in dem an den Boden angrenzenden Behältermantel eine Anzahl kleiner Öffnungen (Düsen), durch die die Druckluft oder das Inert-Gas zugeführt wird.

Die Austrittsöffnung des Zwischenbehälters wird durch ein sich oben durch den Zwischenbehälter bis gegen dessen Boden bzw. in den Bereich des Fluidisierungsmantels erstreckendes Rohr gebildet. Diese Anordnung verhindert ein Zusetzen der Austrittsöffnung durch beim Füllen des Zwischenbehälters in die Austrittsöffnung fallendes Transportgut. Ein weiterer Vorteil dieser Anordnung ist die geringe Staubbelastung für das zur Austrittsöffnung gehörende Schließventil. Die Austrittsöffnung und das dazugehörende Schließventil können nach Beendigung des Entleerungsvorganges sauber geblasen werden. Mit dem Sauberblasen der Austrittsöffnung ist zugleich ein Sauberblasen des gesamten Zwischenbehälters verbunden. Das verhindert eine Staubbelastung des zur Saugleitung gehörenden Schließventils und erübrigt einen Filter vor dem Schließventil in der Saugleitung. Ohne diesen Filter ist die notwendige Saugleistung infolge geringeren Strömungswiderstandes geringer. Wahlweise ist das Rohr höhenverstellbar und/oder auswechselbar und/oder der Boden des Zwischenbehälters und/oder der Fluidisierungsmantel auswechselbar, so daß der Fluidisierungsvorgang auf das jeweilige Transportgut optimiert werden kann bzw. regelbar ist.

In der Zeichnung ist ein Ausführungsbeispiel der Erfindung dargestellt. Es zeigt

Abb. 1 eine schematische Gesamtansicht einer kontinuierlich arbeitenden erfindungsgemäßen Entleerungsvorrichtung.

Abb. 2 einen Entleerungsbehälter, der Entleerungsvorrichtung nach Abb. 1 in einer Detailansicht.

0 040 389

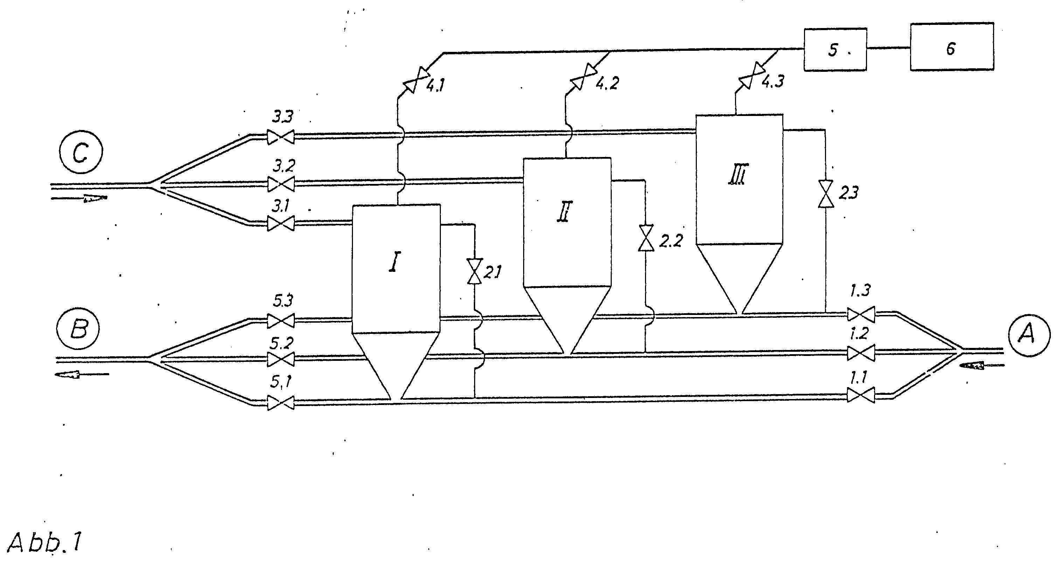

Nach Abb. 1 besteht die erfindungsgemäße Entleerungsvorrichtung aus Zwischenbehältern I bis III. Die drei Zwischenbehälter I bis III sind parallel zueinander geschaltet. Zu jedem Zwischenbehälter I bis III führen jeweils eine Saugleitung, Druckleitung, Anschlußleitung und Entleerungsleitung. Jeder Arbeitszyklus beginnt mit dem Evakuieren der Zwischenbehälter I—III. Dazu sind die mit den Zwischenbehältern I—III verbundenen Saugleitungen gemeinsam an eine Vakuumpumpe 6 angeschlossen. Aus Sicherheitsgründen ist der Vakuumpumpe 6 ein Filter 5 vorgeschaltet. In jeder Saugleitung befindet sich ein Schließventil. Das zu dem Behälter I gehörende Schließventil ist mit 4.1, das zum Behälter II gehörende Schließventil mit 4.2 und das zum Zwischenbehälter III gehörende Schließventil mit 4.3 bezeichnet.

Die evakuierten Zwischenbehälter I—III saugen jeweils über eine sie mit dem Transportbehälter verbindende Anschlußleitung Transportgut aus dem das Transportgut enthaltenden Transportbehälter. In den Anschlußleitungen der Zwischenbehälter I—III befinden sich gleichfalls Schließventile. Diese Schließventile sind mit 3.1, 3.2 und 3.3 bezeichnet.

Nach Ansaugen von Transportgut sind die Zwischenbehälter I—III gefüllt und werden die Zwischenbehälter I—III mit Druck beaufschlagt. Die zur Druckbeaufschlagung zu den Zwischenbehältern I—III führenden Druckleitungen sind gleichfalls mit Schließventilen versehen. Diese Schließventile sind mit 1.1, 1.2 und 1.3 bezeichnet.

Die Druckbeaufschlagung führt zu einer Entleerung der Zwischenbehälter durch Entleerungsleitungen. Auch in den Entleerungsleitungen sind Schließventile vorgesehen. Die Schließventile in den Entleerungsleitungen tragen die Bezeichnungen 5.1, 5.2 und 5.3.

Bei A wird die Entleerungsvorrichtung an ein Preßluftnetz oder eine Gebläsestation angeschlossen. Bei B wird eine Verbindung zu einem Silo hergestellt. Bei C wird das Entleerungssystem an den Transportbehälter angeschlossen und wird beim Füllen der Zwischenbehälter I—III das Transportgut aus dem Transportbehälter gesaugt.

Der Funktionsverlauf der Vorrichtung erfolgt zyklisch. Die Zwischenbehälter I bis III werden in Arbeitsschritten nacheinander evakuiert und entleert. Ein solcher Zyklus ist nachfolgend detailliert beschrieben.

Der mit Transportgut gefüllte Zwischenbehälter I wird entleert. Dazu sind die Ventile 1.1, 5.1 und 2.1 geöffnet, die Schließventile 3.1 und 4.1 sind geschlossen. Gleichzeitig wird der Zwischenbehälter II gefüllt. Dabei ist das Schließventil 3.2 geöffnet. Die Ventile 4.2, 2.2, 1.2 und 5.2 sind geschlossen.

Beim Entleeren des Zwischenbehälters I wird der Zwischenbehälter III nach Öffnen des Schließventiles 4.3 mit Hilfe der Saugpumpe 6 evakuiert. Sämtliche übrigen Ventile sind in dieser ersten Phase geschlossen. Ist der Zwischenbehälter I entleert, wird zunächst nur das Ventil 2.1 geschlossen.

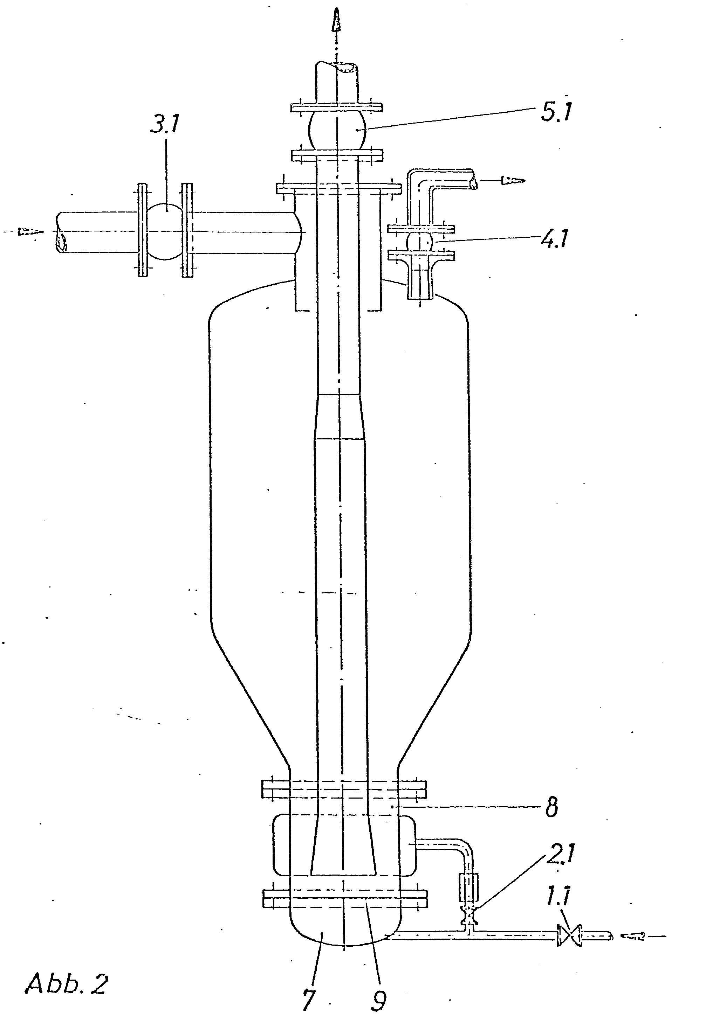

Nach Abb. 2 sind die Zwischenbehälter I bis III gleich ausgebildet. Die Einzelheiten werden am Zwischenbehälter I erläutert.

Der Zwischenbehälter I besitzt eine zylindrische Form und ist am unteren Ende trichterförmig ausgebildet. In das spitze Ende des Zwischenbehälters I ragt die zum Silo führende Entleerungsleitung. Die Entleerungsleitung erstreckt sich von oben durch den gesamten Zwischenbehälter I. Das zur Entleerungsleitung gehörende Ventil 5.1 ist dicht oberhalb des oberen Endes des Zwischenbehälters angeordnet.

Oben mündet zugleich die den Zwischenbehälter I mit dem Transportbehälter verbindende Anschlußleitung mit dem Ventil 3.1. Das Mündungsstück der Anschlußleitung ist als Flansch ausgebildet, der das Rohr der Entleerungsleitung umgibt.

Am oberen Ende des Zwischenbehälters I ist auch die Entleerungsleitung mit dem Ventil 4.1 angeordnet. Der Zwischenbehälter hat im Ausführungsbeispiel ein Volumen von etwa 250 l.

An der Unterseite ist der Zwischenbehälter I mit einem Deckel 7 verschlossen. Zwischen dem Deckel 7 und dem Trichter des Zwischenbehälters I befindet sich ein als zylindrischer Flansch ausgebildeter Mantel 8. Der Zwischenbehälter I, der Mantel 8 und der Deckel 7 sind verschraubt. Zwischen dem Mantel 8 und dem Deckel 7 befindet sich ein Fluidboden 9. Der Fluidboden wird durch einen Lochboden gebildet. Beispielsweise besteht der Lochboden aus perforiertem Blech oder Kunststoff. Der in dem Deckel 7 liegende Hohlraum ist mit der Druckleitung verbunden, in der sich das Ventil 1.1 befindet.

Der Mantel 8 ist als Doppelmantel ausgebildet, dessen Hohlraum gleichfalls mit der Druckleitung verbunden ist. In dieser Verbindung befindet sich das Ventil 2.1.

Der zum Hohlmantel-Bereich gehörende Innenmantel des Mantels 8 wird durch einen Lochmantel gebildet, d. h. besitzt eine Vielzahl von Bohrungen oder anderen Perforationen.

Beim Entleerungsvorgang des Zwischenbehälters I bewirkt die durch den Deckel 7 und den Fluidboden 9 in den Zwischenbehälter I und das Entleerungsrohr eindringende Luft eine Anfangsentleerungsbewegung des Transportgutes im Trichterende des Zwischenbehälters I. Zugleich beginnt das Austragen von Transportgut aus dem Trichterende durch die Entleerungsleitung, indem die Entleerungsleitung eindringende Druckluft Partikel mitreißt.

Die gleiche Wirkung wie die durch den Fluidboden 9 eintretende Druckluft hat die durch den Mantel 8 eintretende Druckluft. Beide Wirkungen ergänzen sich. Ferner durchdringt die Druckluft das gesamte sich in dem Zwischenbehälter befindende Transportgut, so daß das Transportgut zumindest gelockert

4

wird. Dieser mit Fluidisierung bezeichnete Vorgang ermöglicht ein schlagartiges Entleeren des Transportgutes aus dem Zwischenbehälter I.

Die Fluidisierung des sich im Zwischenbehälter I befindenden Transportgutes kann mit dem Vorteil besonders einfacher Steuerung auch bei geschlossenem Ventil 4.1 erreicht werden. Es wird dann ein Druck von etwa 4,5 bar aufgebaut. Nach Öffnen des Ventiles 4.1 tritt die Entleerung des Zwischenbehälters I, schlagartig ein.

Für den sich an den Entleerungsvorgang anschließenden Evakuierungsvorgang ist im Ausführungsbeispiel ein Druck von Minus 0,6 bar vorgegeben. Zum Erreichen dieses Unterdruckes wurden bei einem Behältervolumen von ca. 250 l 10 bis 20 Sekunden Ansaugzeit benötigt. Die Einzelschritte des Arbeitszyklus sind in der nachfolgenden Tabelle 1 aufgeführt.

Tabelle 1

| Dauer (sek) | Funktion |
|---|---|
| 33 | Evakuieren |
| 2 | Totzeit zwischen Schließen von Ventil 1 und Öffnen von Ventil 2 |
| 10 bzw. 20 | Ansaugzeit |
| 2 | Totzeit zwischen Schließen von Ventil 2 und Öffnen von Ventil 3 |
| 4 | Druckaufbau im Behälter |
| 13 | Entleeren und Nachblasen nach Öffnen von Ventil 4 |
| 2 | Totzeit zwischen Schließen von Ventil 3 und 4 bis Beginn Evakuieren |
| 66 bzw. 76 = | Gesamtdauer eines Zyklus |

Der zeitliche Ablauf eines Entleerungsversuches eines mit ca. 7000 kg beladenen Containers ist in Tabelle 2 zusammengestellt.

Tabelle 2

| Uhrzeit | Dauer (sek) | Tätigkeit | Anzahl der Zyklen |
|---|---|---|---|
| 12.45–14.00 | 75 | Betrieb mit 66 sek Taktzeit | 68 |
| 14.00 | – | Umschalten auf 20 sek Ansaugen | – |
| 14.00–15.40 | 100 | Betrieb mit 76 sek Taktzeit | 78 |
| 15.40–16.15 | 35 | Mech. Störung an Ventil 1 | – |
| 16.15–17.50 | 95 | Betrieb mit 76 sek Taktzeit | 75 |
| | | Summe | 221 |

Die in den Tabellen 1 und 2 angegebenen Ansaugzeiten konnten noch weiter verringert werden, indem die Ansaugleitung vor dem Evakuieren mit einem Druckluftstoß gespült wurde. Die gleiche Wirkung kann durch leichtes Fluidisieren in der Ansaugleitung erreicht werden. Der Druckluftstoß bzw. das Fluidisieren wird durch eine zur Ansaugleitung führende und vor dem zugehörenden Ventil mündende Druckluftleitung ermöglicht. Diese Druckluftleitung ist mit einem Schließventil versehen.

Je besser das Transportgut im Zwischenbehälter fluidisiert wird, desto schneller und leichter erfolgt

5

der Entleerungsvorgang. Gegebenenfalls genügt bereits ein kurzzeitiges Fluidisieren, das vor Beginn des Materialaustritts in des Entleerungsrohr bereits beendet sein kann.

Die Zykluszeiten können durch Vergrößerung der Evakuierungsleistung und/oder durch Zwischenschaltung von Vakuumspeichern, die kontinuierlich evakuiert werden und jeweils nur für die Dauer der Ansaugzeit zugeschaltet werden, verringert werden.

Die Tabellen 1 und 2 zeigen den Betrieb mit einem Zwischenbehälter. Durch Parallelschaltung mehrerer Zwischenbehälter wird der Arbeitszyklus gleichfalls erheblich verringert. Tabellen 3 und 4 zeigen die Daten einer Entleerungsanlage mit den Zwischenbehältern I bis III.

Ausgehend von der Auslegung einer Entleerungsanlage nach Abb. 1 und 2 ist eine Förderleistung von 20 t pro Stunde ohne weiteres erreichbar.

Tabelle 3

| Dauer (sek) | Funktion |
|---|---|
| 6 | Evakuieren |
| 1 | Totzeit zwischen Schließen von Ventil 1 und Öffnen von Ventil 2 |
| 10 | Ansaugzeit |
| 1 | Totzeit zwischen schließen von Ventil 2 und Öffnen von Ventil 3 |
| 3 | Druckaufbau im Behälter |
| 7 | Entleeren und Nachblasen nach Öffnen von Ventil 4 |
| 2 | Totzeit zwischen Schließen von Ventil 3 und 4 bis Beginn Evakuieren |
| 30 | = Gesamtdauer eines Zyklus |

Tab. 3: Realisierbare Taktzeiten

Tabelle 4

| Funktion Ort | Zeitfolge in sek für die Funktionen | | |
|---|---|---|---|
| | Evakuieren | Material ansaugen | Entleeren |
| Behälter I | 0— 6 | 8—18 | 19—29 |
| Behälter II | 10—16 | 18—28 | 29—39 |
| Behälter III | 20—26 | 28—38 | 39—49 |
| Behälter I | usw. | | |

Tabelle 4: Zeitfolgen einer dreistufigen Anlage.

**Patentansprüche**

1. Arbeitsverfahren zum Entleeren von Behältern, insbesondere Containern, für feinkörniges, insbesondere staubförmiges Transportgut, wobei das Transportgut aus dem Behälter in einen Zwischenbehälter (I, II, III) angesaugt wird, der danach gegenüber dem das Transportgut enthaltenden Behälter verschlossen wird und mit Druck beaufschlagt wird, so daß das in den Zwischenbehälter eindringende Druckmittel das Transportgut in eine geöffnete Entleerungsleitung (5.1, 5.2, 5.3) drückt, dadurch gekennzeichnet, daß der Zwischenbehälter (I, II, III) in gegenüber dem das Transportgut enthaltenden Behälter geschlossenem Zustand evakuiert wird, der Zwischenbehälter (I, II, III) anschließend gegenüber der Evakuierungseinrichtung verschlossen und zu dem das Transportgut enthaltenden Behälter geöffnet wird.

2. Verfahren nach Anspruch 1, dadurch gekennzeichnet, daß sich das im Zwischenbehälter (I, II, III) befindende Gut unmittelbar vor dem Öffnen der Entleerungsleitung (5.1, 5.2, 5.3) und/oder beim Entleeren durch die Entleerungsleitung (5.1, 5.2, 5.3) mit dem aus der Druckleitung (1.1, 1.2, 1.3, 2.1, 2.2, 2.3) austretenden Druckmittel fluidisiert wird.

3. Verfahren nach Anspruch 1 oder 2, gekennzeichnet durch mehrere parallelgeschaltete Zwischenbehälter (I, II, III) mit gegeneinander versetzten Arbeitstakten.

## Claims

1. Method for emptying of vessels, especially containers, for fine-grained transportable material, especially powdery transportable material, wherein the transportable material is sucked out of the vessel into an intermediate vessel (I, II, III), which thereafter is closed off relatively to the vessel containing the transportable material and is acted on with pressure, so that the pressure medium entering into the intermediate vessel forces the transportable material into an opened discharge conduit (5.1, 5.2, 5.3), characterised in that the intermediate vessel (I, II, III) is evacuated while in closed condition relative to the vessel containing the transportable material, thereupon the intermediate vessel (I, II, III) is closed off relative to the evacuating device and is opened to the vessel containing the transportable material.

2. Method according to claim 1, characterised in that the material in the intermediate vessel (I, II, III) is fluidised by the pressure medium emerging from the pressure conduit (1.1, 1.2, 1.3, 2.1, 2.2, 2.3) immediately before the opening of the discharge conduit (5.1, 5.2, 5.3) and/or during emptying through the discharge conduit (5.1, 5.2, 5.3).

3. Method according to claim 1 or 2, characterised by a plurality of intermediate vessels (I, II, III) connected in parallel with operating strokes out of step with one another.

## Revendications

1. Procédé de vidage de réservoirs, notamment de conteneurs, pour denrées à granulation fine, en particulier pulvérulentes, la denrée étant aspirée du réservoir dans un ballon intermédiaire (I, II, III), qui est ensuite isolé du réservoir contenant la denrée et mis sous pression, de sorte que l'agent de pression pénétrant dans le ballon pousse la denrée dans une conduite ouverte de vidage (5.1, 5.2, 5.3), caractérisé en ce que le ballon intermédiaire (I, II, III) est fermé par rapport au réservoir contenant la denrée et mis sous vide, puis aussitôt isolé de l'installation faisant le vide, et ouvert sur le réservoir contenant la denrée.

2. Procédé selon la revendication 1, caractérisé en ce que la denrée se trouvant dans le ballon intermédiaire (I, II, III) est immédiatement fluidifiée avant l'ouverture de la conduite de vidage (5.1, 5.2, 5.3), et/ou lors du vidage par ladite conduite (5.1, 5.2, 5.3), au moyen de l'agent de pression sortant de la conduite de pression (1.1, 1.2, 1.3; 2.1, 2.2, 2.3).

3. Procédé selon la revendication 1 ou 2, caractérisé par plusieurs ballons intermédiaires (I, II, III) montés en parallèle avec des cycles opératoires décalés entre eux.

Abb.1

Abb. 2